(19) Europäisches Patentamt
European Patent Office
Office européen des brevets

(11) **EP 3 803 158 B1**

(12) **EUROPÄISCHE PATENTSCHRIFT**

(45) Veröffentlichungstag und Bekanntmachung des Hinweises auf die Patenterteilung:
**21.09.2022 Patentblatt 2022/38**

(21) Anmeldenummer: **19726328.8**

(22) Anmeldetag: **15.05.2019**

(51) Internationale Patentklassifikation (IPC):
**F16H 3/64** *(2006.01)* **F16H 3/66** *(2006.01)*

(52) Gemeinsame Patentklassifikation (CPC):
**F16H 3/663;** F16H 2200/0034; F16H 2200/2005;
F16H 2200/2038; F16H 2200/2064;
F16H 2200/2066; F16H 2200/2082;
F16H 2200/2094

(86) Internationale Anmeldenummer:
**PCT/EP2019/062456**

(87) Internationale Veröffentlichungsnummer:
**WO 2019/228807 (05.12.2019 Gazette 2019/49)**

(54) **LASTSCHALTBARES MEHRGANGGETRIEBE**

POWER-SHIFT MULTI-SPEED TRANSMISSION

TRANSMISSION MULTIVITESSES COUPABLE SOUS CHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2018 DE 102018208583**

(43) Veröffentlichungstag der Anmeldung:
**14.04.2021 Patentblatt 2021/15**

(73) Patentinhaber: **Robert Bosch GmbH 70442 Stuttgart (DE)**

(72) Erfinder:
• **KRASTEV, Ianislav**
  **71638 Ludwigsburg (DE)**
• **MOHAMED, Wael**
  **71282 Hemmingen (DE)**
• **SCHLITTENBAUER, Tobias**
  **71679 Asperg (DE)**

(56) Entgegenhaltungen:
WO-A1-2014/029650 DE-A1-102015 104 778
DE-T5-112011 104 355

**Beschreibung**

Technisches Gebiet

Die Erfindung bezieht sich auf ein lastschaltbares Mehrganggetriebe mit mindestens einem insbesondere ein Planetengetriebe, das um ein erstes Sonnenrad umläuft und dessen Verwendung in einem Fahrzeug.

Stand der Technik

CN 104875608 A bezieht sich auf eine Antriebsachse eines elektrischen Fahrzeugs. Gemäß dieser Lösung ist eine elektrische Maschine in koaxialer Anordnung in Fahrzeug integriert und treibt ein Differentialgetriebe an. Differentialgetriebe, insbesondere die einen Käfig darstellenden Kegelräder, treiben einen ersten Achsantrieb und einen zweiten Achsantrieb an, an denen wiederum die angetriebenen Räder des Fahrzeugs aufgenommen sind. Bei dem aus CN 104875608 A bekannten E-Achsensatz lassen sich zwar verschiedene Übersetzungsstufen schalten, jedoch sind die Schaltmöglichkeiten begrenzt.

DE 11 2011 104355 T5 offenbart ein lastschaltbares Mehrganggetriebe, welches unter den Wortlaut des Oberbegriffs des Anspruchs 1 fällt.

Darstellung der Erfindung

Anspruch 1 gibt ein lastschaltbares Mehrganggetriebe an, für das Schutz begehrt wird. Die abhängigen Ansprüche betreffen besondere Ausführungsarten der in Anspruch 1 beanspruchten Erfindung.

Vorteile der Erfindung

Durch die erfindungsgemäß vorgeschlagene Lösung wird ein leistungsstarkes Getriebe zur Verfügung gestellt, welches zwei Übersetzungsstufen $i\_1$ und $i\_2$, eine Rückwärtsgangfunktion mit der Übersetzung $i\_R$ sowie eine Parksperrenfunktion realisiert. Insbesondere ist hervorzuheben, dass eine Lastschaltbarkeit der Planetensätze gegeben ist und ferner eine Wirkungsgradsteigerung erreicht werden kann. Die Verwendung einer ersten und einer zweiten Bremse, die in unterschiedlichen Positionen montiert werden können, sowie die Verwendung eines mittels einer Verrasteinrichtung blockierbaren Freilaufes, ermöglicht unterschiedliche Ausführungsvarianten des erfindungsgemäß vorgeschlagenen lastschaltbaren Mehrganggetriebes. In jeder Ausführungsvariante stehen drei Übersetzungen, nämlich $i\_1$, $i\_2$ sowie in entgegengesetzte Drehrichtung $i\_R$ zur Verfügung. Die Übersetzungen $i\_1$ im ersten Gang sowie $i\_2$ für den zweiten Gang gelten für eine Drehrichtung, die

Übersetzung $i\_3$ in einigen Schaltvarianten in die dazu entgegengesetzte Drehrichtung zur Ermöglichung einer Rückwärtsgangfunktion.

Durch den Einsatz von drei Getriebeelementen, nämlich erster Bremse, zweiter Bremse und und der Verrastfunktion für den Freilauf, kann das lastschaltbare Mehrganggetriebe in eine Parksperrenfunktion überführt werden, wenn mindestens zwei der aufgezählten Getriebeelemente geschlossen werden. Kommt nur eine Bremse zum Einsatz, so kann der Freilauf mittels der Verrasteinrichtung blockiert werden und die Parksperrenfunktion mit übernehmen.

Kurze Beschreibung der Zeichnungen

Anhand der Zeichnung wird die Erfindung nachstehend eingehender beschrieben.

Es zeigt:

Figur 1    ein erfindungsgemäß vorgeschlagenes lastschaltbares Mehrganggetriebe,
Figur 2    eine erste Ausführungsvariante von Positionen, in denen eine erste und eine zweite Bremse angeordnet sind,
Figur 3    eine zweite Ausführungsvariante der Positionen der Anordnung der beiden Bremsen, wobei diese zweite Variante nicht unter den Wortlaut des Anspruchs 1 fällt,
Figur 4    eine dritte Ausführungsvariante, in der die beiden Bremsen angeordnet werden können, wobei diese dritte Variante nicht unter den Wortlaut des Anspruchs 1 fällt,
Figur 5    eine achsparallele Anordnung des lastschaltbaren Mehrganggetriebes parallel zur Antriebsachse eines Fahrzeugs und
Figur 6    eine koaxiale Anordnung von Stator und Rotor einer E-Maschine, dem lastschaltbaren Mehrganggetriebe sowie eines Differentials als E-Achsen-Modul.

Ausführungsvarianten

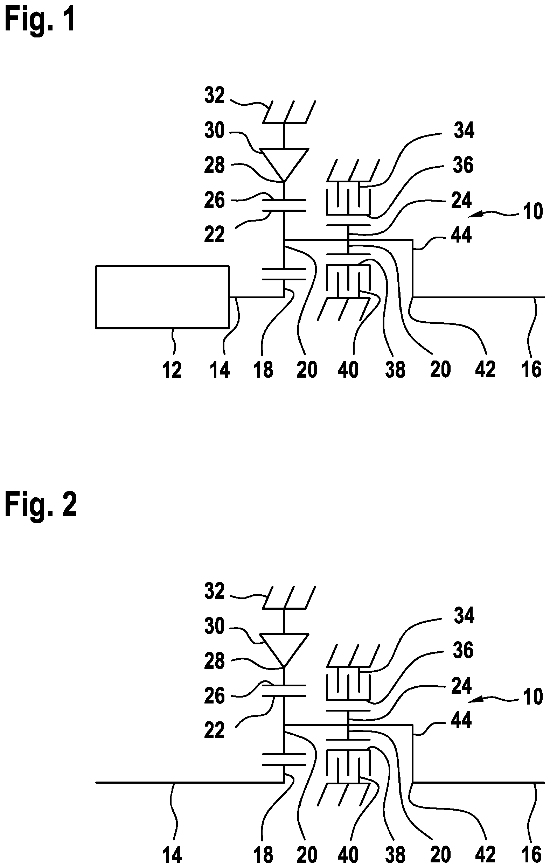

Figur 1 zeigt eine Ausführungsvariante des erfindungsgemäß vorgeschlagenen lastschaltbaren Mehrganggetriebes 10.

Eine hier in Figur 1 nur schematisch angeordnete E-Maschine 12 treibt eine Antriebswelle 14 des lastschaltbaren Mehrganggetriebes 10 an. Darüber hinaus umfasst das lastschaltbare Mehrganggetriebe 10 abtriebsseitig eine Abtriebswelle 16. Auf der Antriebswelle 14 ist ein erstes Sonnenrad 18 aufgenommen, um welches ein Stufenplanetenrad 20 umläuft. Das Stufenplanetenrad 20 läuft in einem ersten Hohlrad 26 um. Das Stufenplanetenrad 20 umfasst eine erste Planetenradstufe 22 sowie eine zweite Planetenradstufe 24. Das erste Hohlrad 26 ist in einem Freilauf 28 gelagert, der mittels einer Verrasteinrichtung 30 freigegeben oder blockiert werden kann. Der Freilauf 28 stützt sich am Gehäuse 32 des lastschaltbaren Mehrganggetriebes 10 ab.

Wie aus der Darstellung gemäß Figur 1 hervorgeht, umfasst das lastschaltbare Mehrganggetriebe 10 eine erste Bremse 34 und eine zweite Bremse 40. In der in Figur 1 dargestellten Ausführungsvariante ist die erste Bremse 34 einem zweiten Hohlrad 36 zugeordnet. Die zweite Bremse 40 ist einem zweiten Sonnenrad 38 zugeordnet. Die unterschiedlichen Einbaupositionen der ersten Bremse 34 und der zweiten Bremse 40 werden nachstehend unter Verweis auf die Figuren 2, 3 und 4 noch eingehender beschrieben.

Figur 1 ist darüber hinaus zu entnehmen, dass das Stufenplanetenrad 20 so ausgeführt ist, dass die Zähnezahl $z\_p1$ der ersten Planetenradstufe 22 die Zähnezahl $z\_p2$ der zweiten Planetenradstufe 24 übersteigt. Während die erste Planetenradstufe 22 um das erste Sonnenrad 18 und im ersten Hohlrad 26 umläuft, läuft die zweite Planetenradstufe 24 des Stufenplanetenrades 20 um das zweite Sonnenrad 38 und im zweiten Hohlrad 36 um. Das in Figur 1 dargestellte Stufenplanetenrad 20 ist an einem Planetenträger 42 aufgenommen, an den eine Stegwelle 44 anschließt.

Der Darstellung gemäß Figur 2 ist eine erste Anordnungsmöglichkeit der ersten Bremse 34 und der zweiten Bremse 40 im lastschaltbaren Mehrganggetriebe 10 zu entnehmen.

Die erste Bremse 34 befindet sich in einer ersten Position 52, aufgenommen am Gehäuse 32. Mit der ersten Bremse 34, montiert in der ersten Position 52, kann das zweite Hohlrad 36 gebremst werden, welches mit der zweiten Planetenradstufe 24 kämmt. Diese wiederum kämmt mit dem zweiten Sonnenrad 38. Dem zweiten Sonnenrad 38 ist in der Darstellung gemäß Figur 2 die zweite Bremse 40 zugeordnet, die sich in ihrer ersten Position 46 befindet. Analog zur Darstellung gemäß Figur 1 umfasst das lastschaltbare Mehrganggetriebe 10 gemäß der Darstellung in Figur 2 die Antriebswelle 14 und die Abtriebswelle 16. An der Antriebswelle 14 ist das erste Sonnenrad 18 aufgenommen, um welches das Stufenplanetenrad 20 umläuft. Dieses kämmt des Weiteren mit dem ersten Hohlrad 26, das am Gehäuse 32 mittels eines eine Verrasteinrichtung 30 aufweisenden Freilaufes 28 ausgeführt ist.

Die beiden Verzahnungen der ersten Planetenradstufe 22 bzw. der zweiten Planetenradstufe 24 sind so ausgeführt, dass die Zähnezahl $z\_p1$ > Zähnezahl $z\_p2$ ist, wodurch sich ein Übersetzungsverhältnis vorgeben lässt. Im ersten Gang des lastschaltbaren Mehrganggetriebes ist beispielsweise die erste Bremse 34 geschlossen, der Freilauf 28 greift nicht. Im ersten Gang stellt sich eine Übersetzung $i\_1$ gemäß der nachfolgenden Beziehung ein:

$$i\_1 = 1 - ((z\_h2/z\_p2) \cdot (z\_p1/z\_s1))$$

mit

$z\_h2$ : Zähnezahl zweites Hohlrad 36
$z\_p2$ : Zähnezahl zweite Planetenradstufe 24
$z\_p1$ : Zähnezahl erste Planetenradstufe 22
$z\_s1$ : Zähnezahl erstes Sonnenrad 18

Wird die erste Bremse 34 hingegen geöffnet und ist der Freilauf 28 durch Aktivierung der Verrasteinrichtung 30 blockiert, d.h. geschlossen, so stellt sich im zweiten Gang eine Übersetzung $i\_2$ ein:

$$i\_2 = 1 - (z\_h1/z\_s1)$$

mit

$z\_h1$ : Zähnezahl erstes Hohlrad 26
$z\_s1$: Zähnezahl erstes Sonnenrad 18

Beim lastschaltbaren Mehrganggetriebe gemäß der Konfiguration wie sie in Figur 2 gegeben ist, kann in einen Rückwärtsgang eine Übersetzung i_R dargestellt werden, wenn die erste Bremse 34 offensteht, die zweite Bremse 40 geschlossen ist und der Freilauf 28 nicht greift. Die Übersetzung im Rückwärtsgang stellt sich wie folgt dar:

$$i\_R = 1 - ((z\_s2/z\_p2) \cdot (z\_p1/z\_s1))$$

mit

z_s2 : Zähnezahl des zweiten Sonnenrades 38
z_p2 : Zähnezahl zweite Planetenradstufe 24
z_p1 : Zähnezahl erste Planetenradstufe 22
z_s1 : Zähnezahl erstes Sonnenrad 18

Beim lastschaltbaren Mehrganggetriebe 10 kann darüber hinaus auch eine Parksperrenfunktion realisiert werden. Für die Umsetzung der Parksperrenfunktion müssen zwei der drei Getriebeelemente erste Bremse 34, zweite Bremse 40 und Verrasteinrichtung 30 für den Freilauf 28 geschlossen sein.

Während gemäß der Ausführungsvariante des lastschaltbaren Mehrganggetriebes 10 nach Figur 2 sich die erste Bremse 34 in der ersten Position 52 befindet, ist die zweite Bremse 40 in ihrer ersten Position 46 angeordnet.

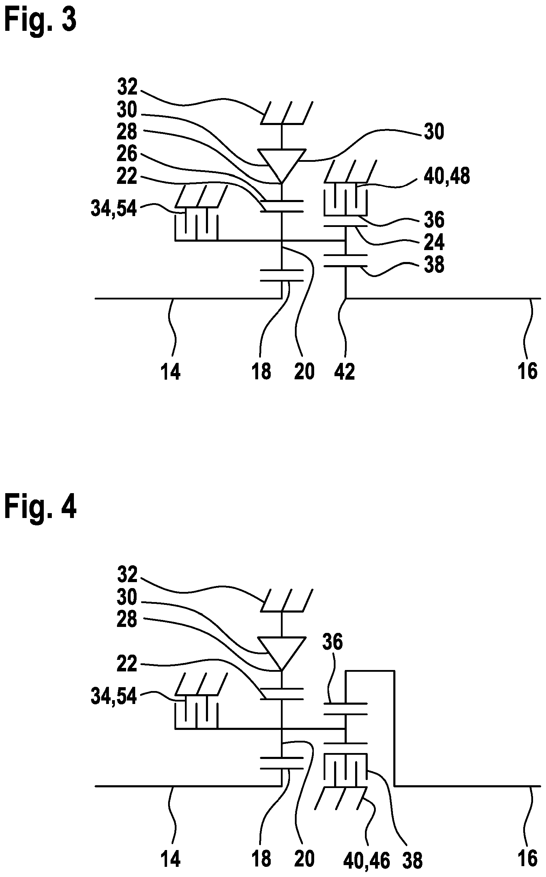

In der nicht unter den Wortlaut des Anspruchs 1 fallenden Ausführungsvariante gemäß Figur 3 hingegen befindet sich die erste Bremse 34 seitlich versetzt in ihrer zweiten Position 54 auf einer Verlängerung der Stegwelle 44, auf der das Stufenplanetenrad 20 mit seiner ersten Planetenradstufe 22 und seiner zweiten Planetenradstufe 24 aufgenommen ist. Die zweite Bremse 40 ist in der Ausführungsvariante gemäß Figur 3 in einer zweiten Position 48 angeordnet. In der in Figur 3 dargestellten Ausführungsvariante des lastschaltbaren Mehrganggetriebes 10 ist ein zweites Sonnenrad 38 auf der Abtriebswelle 16 aufgenommen.

In der nicht unter den Wortlaut des Anspruchs 1 fallenden Ausführungsvariante gemäß Figur 4 befindet sich die erste Bremse 34 analog zur Variante gemäß Figur 3 in ihrer zweiten Position 54, während die zweite Bremse 40 in ihrer ersten Position 46 angeordnet ist. Ein zweites Hohlrad 36 ist in der Variante gemäß Figur 4 mit der Abtriebswelle 16 am Abtrieb des lastschaltbaren Mehrganggetriebes 10 direkt verbunden.

Bei der in Figur 2 dargestellten Anordnung kann beim lastschaltbaren Mehrganggetriebe 10 das zweite Sonnenrad 38 für eine Verwendung als Zweiganggetriebe entfallen. Die zweite Bremse 40 ermöglicht mit dem zweiten Sonnenrad 38 hingegen die Darstellung eines Rückwärtsganges.

Bei der Ausführungsvariante gemäß Figur 3 ermöglicht das lastschaltbare Mehrganggetriebe 10 drei verschiedene Übersetzungen in gleicher Drehrichtung.

Bei der Variante gemäß Figur 4 kann mittels des Freilaufes 28 am ersten Hohlrad 26 eine andere Drehrichtung eingestellt werden, als bei Betätigung der ersten Bremse 34 und der zweiten Bremse 40 realisierbar wären.

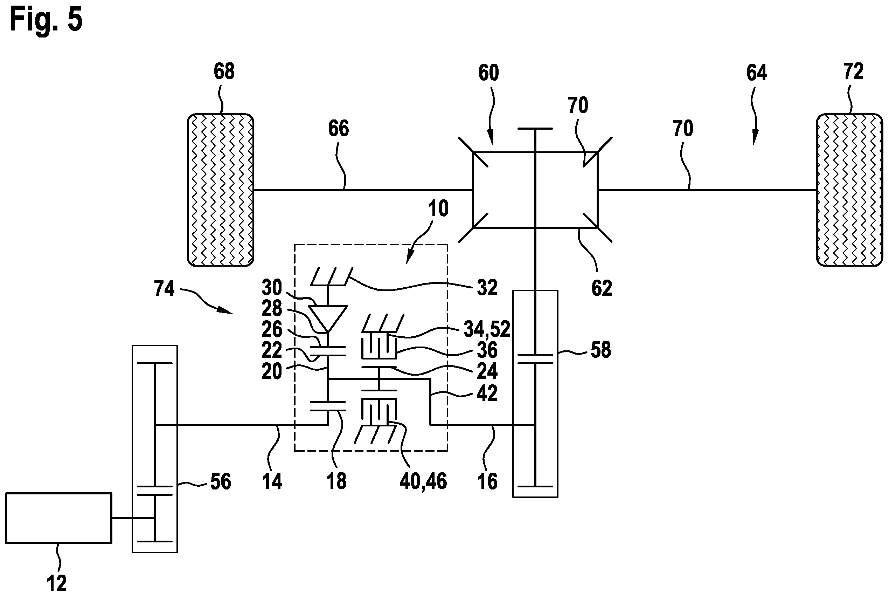

Figur 5 zeigt das erfindungsgemäß vorgeschlagene lastschaltbare Mehrganggetriebe in einer achsparallelen Anordnung 74.

Wie Figur 5 zeigt, treibt eine hier schematisch dargestellte E-Maschine 12 eine erste Stirnradstufe 56 an. Über diese erfolgt die Einleitung des Antriebes in die Antriebswelle 14 des lastschaltbaren Mehrganggetriebes 10. An der Antriebswelle 14 ist das erste Sonnenrad 18 aufgenommen, welches mit der ersten Planetenradstufe 22 des Stufenplanetenrades 20 kämmt. Diese wiederum läuft in einem ersten Hohlrad 26 um, das über einen Freilauf 28, der mit einer Verrasteinrichtung 30 blockiert werden kann, am Gehäuse 32 des lastschaltbaren Mehrganggetriebes 10 aufgenommen ist.

In der Darstellung gemäß Figur 5 befindet sich die erste Bremse 34 in ihrer ersten Position 52, während die zweite Bremse 40 in ihrer ersten Position 46, dem zweiten Sonnenrad 38 zugeordnet ist.

Das am Planetenträger 42 aufgenommene Stufenplanetenrad 20 wirkt auf die Abtriebswelle 16, die wiederum über eine zweite Stirnradstufe 58 ein Differentialgetriebe 60 antreibt. Das Differentialgetriebe 60 umfasst einen Käfig 62, der aus einer Anzahl von Kegelrädern gebildet wird. Abtriebsseitig des Differentialgetriebes 60 erstrecken sich ein erster Achsteil 66 zum ersten Rad 68 sowie ein zweiter Achsteil 70 zum zweiten Rad 72 des Fahrzeugs.

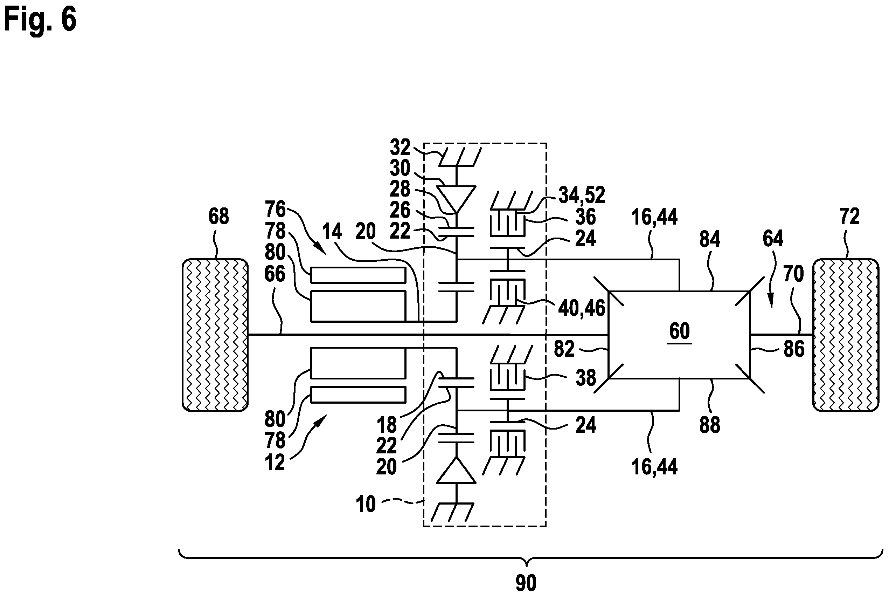

Der Darstellung gemäß Figur 6 ist eine Koaxialanordnung 76 des lastschaltbaren Mehrganggetriebes 10 und seine Integration in eine Antriebsachse 64 zu entnehmen.

Das hier vollständig dargestellte lastschaltbare Mehrganggetriebe 10 ist symmetrisch bezüglich des ersten Achsteiles 66 der Antriebsachse 64 aufgebaut. Wie die Darstellung gemäß Figur 6 zeigt, sind in der Koaxialanordnung 76 des lastschaltbaren Mehrganggetriebes 10 ein Stator 78 der E-Maschine 12 sowie ein Rotor 80 der E-Maschine 12 in die Antriebsachse 64 integriert. Der Rotor 80 treibt unmittelbar die Antriebswelle 14 an. Die in der Darstellung gemäß Figur 6 dargestellten Stufenplanetenräder 20 laufen um das erste Sonnenrad 18 um. Dabei kämmen die jeweils ersten Planetenradstufen 22 der dargestellten Stufenplanetenräder 20 mit einer Innenverzahnung des ersten Hohlrades 26. Dieses ist mittels eines Freilaufes 28 am Gehäuse 32 gelagert. Der Freilauf 28 kann über eine Verrasteinrichtung 30

blockier werden.

Die in Figur 6 dargestellten beiden zweiten Planetenradstufen 24 der Stufenplanetenräder 20 laufen um ein zweites Sonnenrad 38 um, dem die zweite Bremse 40 in ihrer ersten Position 46 zugeordnet ist. Die erste Bremse 34 hingegen befindet sich in ihrer ersten Position 52 und ist einem kleineren zweiten Hohlrad 36 zugeordnet. Abtriebsseitig stehen die Stegwellen 44, an den die Stufenplanetenräder 20 aufgenommen sind, mit der Abtriebswelle 16 in Verbindung, welche das Differentialgetriebe 60 antreibt. Dessen Käfig 62 wird durch eine Anzahl von Kegelrädern, nämlich dem ersten Kegelrad 82, dem zweiten Kegelrad 84, dem dritten Kegelrad 86 sowie dem vierten Kegelrad 88 gebildet. Vom Käfig 62 des Differentialgetriebes 60 aus erstrecken sich ein erster Achsteil 66 und ein zweiter Achsteil 70 in Richtung der beiden Räder 68 bzw. 72. Die Komponenten der E-Maschine 12, d.h. deren Stator 78 und deren Rotor 80 bilden mit dem Differentialgetriebe 60 sowie dem lastschaltbaren Mehrganggetriebe 10 eine integrierte Einheit, nämlich ein E-Achsen-Modul, welches durch das Bezugszeichen 90 gekennzeichnet ist und eine kompakte Baueinheit darstellt.

**Patentansprüche**

1. Lastschaltbares Mehrganggetriebe (10) mit mindestens einem Stufenplanetenrad (20), das um ein erstes Sonnenrad (18) umläuft und in einem ersten Hohlrad (26) umläuft, wobei das erste Hohlrad (26) in einem verrastbaren Freilauf (28) umläuft und eine erste Planetenradstufe (22) des mindestens einen Stufenplanetenrades (20) in dem ersten Hohlrad (26) umläuft, während eine zweite Planetenradstufe (24) in einem zweiten Hohlrad (36) umläuft, dem mindestens eine erste Bremse (34, 40) zugeordnet ist, **dadurch gekennzeichnet, dass** eine zweite Bremse (40) einem zweiten Sonnenrad (38), mit dem die zweite Planetenradstufe (24) kämmt, zugeordnet ist.

2. Lastschaltbares Mehrganggetriebe (10) gemäß Anspruch 1, **dadurch gekennzeichnet, dass** die erste Planetenradstufe (22) eine Verzahnung mit einer Zähnezahl z_pl und die zweite Planetenradstufe (24) eine Verzahnung mit einer Zähnezahl z_p2 aufweist, mit z_pl > z_p2.

3. Lastschaltbares Mehrganggetriebe (10) gemäß Anspruch 1, **dadurch gekennzeichnet, dass** dieses bei geschlossener erster Bremse (34) und freigegebenem Freilauf (28) eine erste Übersetzung i_1 darstellt, die gegeben ist durch:

$$i\_1 = 1 - ((z\_h2/z\_p2) \cdot (z\_p1/z\_s1))$$

mit

    z_h2 : Zähnezahl zweites Hohlrad (36)
    z_p2 : Zähnezahl zweite Planetenradstufe (24)
    z_pl : Zähnezahl erste Planetenradstufe (22)
    z_s1 : Zähnezahl erstes Sonnenrad (18)

4. Lastschaltbares Mehrganggetriebe (10) gemäß Anspruch 1, **dadurch gekennzeichnet, dass** dieses bei geöffneter erster Bremse (34) und durch eine Verrasteinrichtung (30) blockiertem Freilauf (28) eine zweite Übersetzung i_2 darstellt, die gegeben ist durch:

$$i\_2 = 1 - (z\_h1/z\_s1)$$

mit

    z_h1 : Zähnezahl erstes Hohlrad (26)
    z_s1 : Zähnezahl erstes Sonnenrad (18)

5. Lastschaltbares Mehrganggetriebe gemäß Anspruch 1, **dadurch gekennzeichnet, dass** dieses bei geöffneter erster Bremse (34), geschlossener zweiter Bremse (40) und freigegebenem Freilauf (28) einen Rückwärtsgang in der Übersetzung i_R darstellt, die gegeben ist durch:

$$i\_R = 1 - ((z\_s2/z\_p2) \cdot (z\_p1/z\_s1))$$

mit

z_s2 : Zähnezahl des zweiten Sonnenrades (38)
z_p2 : Zähnezahl zweite Planetenradstufe (24)
z_pl : Zähnezahl erste Planetenradstufe (22)
z_s1 : Zähnezahl erstes Sonnenrad (18).

6. Lastschaltbares Mehrganggetriebe (10) gemäß Anspruch 1, **dadurch gekennzeichnet, dass** bei geschlossener erster Bremse (34) und geschlossener zweiter Bremse (40) oder bei geschlossener erster Bremse (34) und mittels der Verrasteinrichtung (30) blockiertem Freilauf (28) das lastschaltbare Mehrganggetriebe (10) eine Parksperrenfunktion annimmt.

7. Fahrzeug mit einem lastschaltbaren Mehrganggetriebe (10) gemäß Anspruch 1, **dadurch gekennzeichnet, dass** dieses in achsparalleler Anordnung (74) zur Antriebsachse (64) des Fahrzeugs angeordnet ist.

8. Fahrzeug gemäß Anspruch 7, **dadurch gekennzeichnet, dass** dieses über mindestens eine Stirnradstufe (56, 58) ein Differentialgetriebe (60) oder eine Torque Vectoring-Einheit einer Antriebsachse (64) des Fahrzeugs antreibt.

9. Fahrzeug mit einem lastschaltbaren Mehrganggetriebe (10) gemäß Anspruch 1, **dadurch gekennzeichnet, dass** dieses in Koaxialanordnung (76) in einer Antriebsachse (64) des Fahrzeugs integriert ist, ebenso wie ein Stator (78) und ein Rotor (80) der E-Maschine (12).

10. Fahrzeug gemäß Anspruch 9, **dadurch gekennzeichnet, dass** die in Koaxialanordnung (76) angeordnete E-Maschine (12) und das in die Antriebsachse (64) integrierte lastschaltbare Mehrganggetriebe (10) mit Differentialgetriebe (60) ein E-Achsen-Modul (90) für das Fahrzeug bilden.

**Claims**

1. Power-shift multi-speed transmission (10), having at least one stepped planet gear (20), which revolves around a first sun gear (18) and in a first ring gear (26), wherein the first ring gear (26) revolves in a latchable freewheel (28), and a first planet gear step (22) of the at least one stepped planet gear (20) revolves in the first ring gear (26), while a second planet gear step (24) revolves in a second ring gear (36), with which at least one brake (34, 40) is associated, **characterized in that** a second brake (40) is associated with a second sun gear (28) with which the second planet gear step (24) meshes.

2. Power-shift multi-speed transmission (10) according to Claim 1, **characterized in that** the first planet gear step (22) has a tooth system with a number of teeth z_pl and the second planet gear step (24) has a tooth system with a number of teeth z_p2, where z_p1 > z_p2.

3. Power-shift multi-speed transmission (10) according to Claim 1, **characterized in that**, with the first brake (34) closed and the freewheel (28) released, said transmission forms a first transmission ratio i_1, which is given by:

$$i\_1 = 1 - ((z\_h2/z\_p2)\ \overline{(z\_p1/z\_s1)})$$

where

z_h2: number of teeth of second ring gear (36)
z_p2: number of teeth of second planet gear step (24)
z_pl: number of teeth of first planet gear step (22)
z_s1: number of teeth of first sun gear (18).

4. Power-shift multi-speed transmission (10) according to Claim 1, **characterized in that**, with the first brake (34) opened and the freewheel (28) locked by a latching device (30), said transmission forms a second transmission ratio i_2, which is given by:

$$i\_2 = 1 - (z\_h1/z\_s1)$$

where

z_h1 : number of teeth of first ring gear (26)
z_s1 : number of teeth of first sun gear (18).

5. Power-shift multi-speed transmission according to Claim 1, **characterized in that**, with the first brake (34) opened, the second brake (40) closed and the freewheel (28) released, said transmission forms a reverse gear in the transmission ratio i_R, which is given by:

$$i\_R = 1 - ((z\_s2/z\_p2)\ (z\_p1/z\_s1))$$

where

z_s2: number of teeth of second sun gear (38)
z_p2: number of teeth of second planet gear step (24)
z_pl: number of teeth of first planet gear step (22)
z_s1: number of teeth of first sun gear (18).

6. Power-shift multi-speed transmission (10) according to Claim 1, **characterized in that**, with the first brake (34) closed and the second brake (40) closed or with the first brake (34) closed and the freewheel (28) locked by means of the latching device (30), the power-shift multi-speed transmission (10) performs a parking lock function.

7. Vehicle having a power-shift multi-speed transmission (10) according to Claim 1, **characterized in that** said transmission is arranged in an arrangement (74) axially parallel to the driven axle (64) of the vehicle.

8. Vehicle according to Claim 7, **characterized in that** said transmission drives a differential (60) or a torque vectoring unit of a driven axle (64) of the vehicle via at least one spur gear stage (56, 58).

9. Vehicle having a power-shift multi-speed transmission (10) according to Claim 1, **characterized in that** said transmission is integrated in a coaxial arrangement (76) in a driven axle (64) of the vehicle, as are a stator (78) and a rotor (80) of the electric machine (12).

10. Vehicle according to Claim 9, **characterized in that** the electric machine (12) arranged in a coaxial arrangement (76) and the power-shift multi-speed transmission (10) with the differential (60) integrated into the driven axle (64) form an electric axle module (90) for the vehicle.

## Revendications

1. Transmission à plusieurs vitesses commutable sous charge (10), comprenant au moins une roue planétaire à étages (20) qui tourne autour d'une première roue solaire (18) et qui tourne dans une première couronne (26), la première couronne (26) tournant dans une roue libre (28) pouvant être enclenchée et un premier étage de roue planétaire (22) de l'au moins une roue planétaire à étages (20) tournant dans la première couronne (26), tandis qu'un deuxième étage de roue planétaire (24) tourne dans une deuxième couronne (36) à laquelle est associé au moins un premier frein (34, 40), **caractérisée en ce qu'un** deuxième frein (40) est associé à une deuxième roue solaire (38) avec laquelle le deuxième étage de roue planétaire (24) vient en prise.

2. Transmission à plusieurs vitesses commutable sous charge (10) selon la revendication 1, **caractérisée en ce que** le premier étage de roue planétaire (22) présente une denture avec un nombre de dents z_p1 et le deuxième étage de roue planétaire (24) une denture avec un nombre de dents z_p2, avec z_pl > z_p2.

3. Transmission à plusieurs vitesses commutable sous charge (10) selon la revendication 1, **caractérisée en ce que** celle-ci représente, lorsque le premier frein (34) est fermé et que la roue libre (28) est libérée, un premier rapport de transmission i_1 qui est donné par :

$$i\_1 = 1 - ((z\_h2/z\_p2) \cdot (z\_p1/z\_s1))$$

avec

z_h2 : nombre de dents de la deuxième couronne (36)
z_p2 : nombre de dents du deuxième étage de roue planétaire (24)
z_pl : nombre de dents du premier étage de roue planétaire (22)
z_s1 : nombre de dents de la première roue solaire (18)

4. Transmission à plusieurs vitesses commutable sous charge (10) selon la revendication 1, **caractérisée en ce que** celle-ci représente, lorsque le premier frein (34) est ouvert et que la roue libre (28) est bloquée par un dispositif d'enclenchement (30), un deuxième rapport de transmission i_2 qui est donné par :

$$i\_2 = 1 - (z\_h1/z\_s1)$$

avec

z_h1 : nombre de dents de la première couronne (26)
z_s1 : nombre de dents de la première roue solaire (18)

5. Transmission à plusieurs vitesses commutable sous charge selon la revendication 1, **caractérisée en ce que** celle-ci représente, lorsque le premier frein (34) est ouvert, que le deuxième frein (40) est fermé et que la roue libre (28) est libérée, un rapport de marche arrière dans le rapport de transmission i_R qui est donné par :

$$i\_R = 1 - ((z\_s2/z\_p2) \cdot (z\_p1/z\_s1))$$

avec

z_s2 : nombre de dents de la deuxième roue solaire (38)
z_p2 : nombre de dents du deuxième étage de roue planétaire (24)
z_pl : nombre de dents du premier étage de roue planétaire (22)
z_s1 : nombre de dents de la première roue solaire (18) .

6. Transmission à plusieurs vitesses commutable sous charge (10) selon la revendication 1, **caractérisée en ce que** lorsque le premier frein (34) est fermé et que le deuxième frein (40) est fermé, ou lorsque le premier frein (34) est fermé et que la roue libre (28) est bloquée au moyen du dispositif d'enclenchement (30), la transmission à plusieurs vitesses commutable sous charge (10) adopte une fonction de verrouillage de stationnement.

7. Véhicule comprenant une transmission à plusieurs vitesses commutable sous charge (10) selon la revendication 1, **caractérisé en ce que** celle-ci est agencée selon un agencement parallèle à l'axe (74) de l'essieu moteur (64) du véhicule.

8. Véhicule selon la revendication 7, **caractérisé en ce que** celle-ci entraîne un différentiel (60) ou une unité Torque Vectoring d'un essieu moteur (64) du véhicule par l'intermédiaire d'au moins un étage de pignon droit (56, 58).

9. Véhicule comprenant une transmission à plusieurs vitesses commutable sous charge (10) selon la revendication 1, **caractérisé en ce que** celle-ci est intégrée selon un agencement coaxial (76) dans un essieu moteur (64) du véhicule, ainsi qu'un stator (78) et un rotor (80) de la machine électrique (12).

10. Véhicule selon la revendication 9, **caractérisé en ce que** la machine électrique (12) agencée selon un agencement coaxial (76) et la transmission à plusieurs vitesses commutable sous charge (10) avec différentiel (60) intégrée dans l'essieu moteur (64) forment un module d'essieu électrique (90) pour le véhicule.

# Fig. 1

# Fig. 2

## Fig. 3

32
30
28
26
22
34,54

30
40,48
36
24
38

14    18  20  42                16

## Fig. 4

32
30
28

22
34,54

36

14    18  20  40,46 38        16

Fig. 5

**Fig. 6**

EP 3 803 158 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 104875608 A
- DE 112011104355 T5